# EUROPÄISCHE PATENTSCHRIFT

(11) **EP 3 417 135 B1**
(45) Veröffentlichungstag und Bekanntmachung des Hinweises auf die Patenterteilung: **26.07.2023**
(21) Anmeldenummer: 17703702.5
(22) Anmeldetag: 01.02.2017
(51) Int. Cl.: E05F 5/02, E05F 15/63

(54) **BREMSVORRICHTUNG FÜR EINEN BEWEGLICHEN TÜRFLÜGEL UND KORRESPONDIERENDER TÜRSCHLIESSER**
BRAKING DEVICE FOR A MOVING DOOR LEAF AND CORRESPONDING DOOR CLOSER
DISPOSITIF DE FREINAGE D'UN BATTANT DE PORTE MOBILE ET DISPOSITIF DE FERMETURE DE PORTE CORRESPONDANT

(30) Priorität: 15.02.2016 DE 102016202225
(43) Veröffentlichungstag der Anmeldung: 26.12.2018
(73) Patentinhaber: GEZE GmbH, 71229 Leonberg (DE)
(72) Erfinder: HUCKER, Matthias, 76359 Marxzell (DE)
(86) Internationale Anmeldenummer: PCT/EP2017/052127
(87) Internationale Veröffentlichungsnummer: WO 2017/140498

(56) Entgegenhaltungen:
- DE-A1- 19 726 021
- DE-A1-102005 044 341
- DE-A1-102011 055 491
- DE-B3-102015 200 284

## Beschreibung

Die Erfindung betrifft eine Bremsvorrichtung für einen beweglichen Türflügel der im Oberbegriff von Patentanspruch 1 angegebenen Art und einen korrespondierenden Türschließer der im Oberbegriff von Patentanspruch 12 angegebenen Art.

Aus dem Stand der Technik sind Türschließer für bewegliche Türflügel mit einem mechanischen Energiespeicher und einer Bremsvorrichtung bekannt und weit verbreitet. Beim manuellen Öffnen des Türflügels wird der mechanische Energiespeicher mit potentieller Energie aufgeladen, welche den losgelassenen Türflügel wieder schließt. Der mechanische Energiespeicher ist beispielsweise als Feder ausgeführt, welche durch das manuelle Öffnen des Türflügels gespannt wird. Danach schließt die potentielle Energie in der Feder den Türflügel. Das Schließmoment des Türflügels ist dabei durch die aktuelle Federspannung und die verschiedenen Übersetzungen im System bestimmt. Die Schließgeschwindigkeit selbst wird in der Bremsvorrichtung beispielsweise durch Öl in einem Dämpfer gedämpft. Durch verschiedene hydraulische Ventile und deren Einstellung kann das gewünschte Schließverhalten des Türflügels eingestellt werden. Dies ermöglicht eine kostengünstige und autarke Implementierung des Türschließers, d.h. der Türschließer funktioniert ohne Zuführung von externer Energie. Allerdings ist Schließgeschwindigkeit des Türflügels mit Ventilen nur in Grenzen einstellbar. So hat beispielsweise eine Endschlagfunktion immer denselben Einsatzpunkt, da nur der Durchfluss aber nicht die Position des Ventils einstellbar ist. Des Weiteren können Funktionen, welche von der aktuellen Geschwindigkeit des Türflügels abhängen, nur aufwändig realisiert werden. Auch gestaltet sich die Regelung der Schließgeschwindigkeit, beispielsweise auf eine gewünschte Schließzeit des Türflügels, als schwierig. Durch Probieren müssen die Ventile entsprechend eingestellt werden. Ändern sich dann die Temperatur des Dämpferöls oder die Reibungsverhältnisse im Türschließer so ändert sich auch die Schließzeit. Zudem kann es durch austretendes Dämpferöl zu Verschmutzungen der Umwelt kommen, falls der Türschließer undicht wird, und das Dämpferöl muss entsorgt werden. Außerdem ist das Dämpferöl in der Regel brennbar, was zur Ausbreitung des Brandes beitragen kann, wenn es im Brandfall austritt und sich entzündet.

Aus der DE 10 2005 028 007 B4 ist ein Antrieb zum Betätigen eines beweglichen Türflügels mit einer gattungsgemäßen Bremsvorrichtung bekannt. Die Bremsvorrichtung, durch welche die Bewegung des Türflügels gebremst werden kann, umfasst einen als Generator betriebenen Elektromotor, dessen Motorwelle durch eine Bewegung des Türflügels drehbar ist und an dessen Motorklemmen eine bewegungsabhängige Motorspannung entsteht, welche an einen Bremsstromkreis angelegt Ist, wobei der Bremsstromkreis zumindest ein als Feldeffekttransistor (FET) ausgeführtes Schaltelement aufweist, über welches die Motorklemmen kurzschließbar sind. Im Bremsstromkreis ist eine Drain-Source-Strecke des Feldeffekttransistors angeordnet und eine Spannung zwischen Gate und Source des Feldeffekttransistors wird über ein Potentiometer eingestellt, welches in Parallelschaltung mit der Drain-Source-Strecke des Feldeffekttransistors angeordnet ist. Ein Spannungsabgriff des Potentiometers ist an den Gate-Anschluss des Feldeffekttransistors angeschlossen. Somit wird der Feldeffekttransistor als spannungsabhängiger Lastwiderstand für den Elektromotor betrieben, so dass die Bremskraft der Bremsvorrichtung von der Ausgangsspannung des als Generator betriebenen Elektromotors abhängig ist.

Die DE 10 2015 200 284 B3 offenbart eine Bremsvorrichtung für einen beweglichen Türflügel mit einem als Generator betriebenen Elektromotor dessen Motorwelle durch eine Bewegung des Türflügels drehbar ist und an dessen Motorklemmen eine bewegungsabhängige Motorspannung (u(t)) entsteht, welche an einen Bremsstromkreis angelegt ist, wobei der Bremsstromkreis (18) zumindest ein Schaltelement aufweist, über welches die Motorklemmen kurzschließbar sind, sowie einen korrespondierenden Türschließer mit einer solchen Bremsvorrichtung. Erfindungsgemäß führt eine Auswerte- und Steuereinheit über das Schaltelement eine Pulsweitenmodulation des Motorstroms (i(t)) durch und stellt eine wirksame Bremskraft zur Dämpfung der Bewegung des Türflügels ein. Die Motorspannung (u(t)) kann auch an einen Ladestromkreis angeschlossen werden.

Die DE 10 2011 055 491 A1 offenbart einen Servotürschließer, umfassend eine Abtriebswelle, eine mit der Abtriebswelle wirkverbundene Antriebsmechanik, einen auf die Antriebsmechanik wirkenden mechanischen Energiespeicher zur Speicherung einer Schließenergie für den Türflügel, eine mit der Abtriebswelle wirkverbundene Motor-/Generatoreinheit, und einen mit der Motor-/Generatoreinheit elektrisch verbundenen elektrischen Energiespeicher zur Speicherung einer Unterstützungsenergie für den Türflügel. Der Erfindung liegt die Aufgabe zugrunde, eine Bremsvorrichtung für einen beweglichen Türflügel und einen korrespondierenden Türschließer anzugeben, welche eine verbesserte Einstellung der Schließgeschwindigkeit des Türflügels und eine autarke Implementierung des Türschließers ermöglichen.

Diese Aufgabe wird durch die Merkmale der Bremsvorrichtung für einen beweglichen Türflügel nach Patentanspruch 1 und durch die Merkmale des Türschließers nach Patentanspruch 12 gelöst.

Vorteilhafte Ausgestaltungen und Weiterbildungen der Erfindung sind in den übrigen Ansprüchen angegeben.

Die erfindungsgemäße Bremsvorrichtung für einen beweglichen Türflügel weist einen Generator auf, dessen mindestens eine Generatorwelle durch eine Bewegung des Türflügels drehbar ist und an dessen Anschlussklemmen eine bewegungsabhängige erste Ausgangsspannung entsteht, welche an eine Auswerte- und Steuerelektronik mit einer Auswerte- und Steuereinheit und einem Bremsstromkreis angelegt ist, welcher eine wirksame Bremskraft zur Dämpfung der Bewegung des Türflügels erzeugt. Hierbei weist der Bremsstromkreis zumindest ein Schaltelement auf, über welches die Anschlussklemmen kurzschließbar sind. Erfindungsgemäß ist eine zweite Ausgangsspannung des Generators an einen Ladestromkreis angelegt, welcher elektrische Energie zur Energieversorgung der Auswerte- und Steuerelektronik speichert.

Zudem wird ein Türschließer mit einem mechanischen Energiespeicher, welcher über eine Kraftübertragungseinrichtung mit einem Türflügel in Wirkverbindung steht und durch manuelles Öffnen des Türflügels mit potentieller Energie aufladbar ist und den losgelassenen Türflügel schließt, und einer erfindungsgemäßen Bremsvorrichtung vorgeschlagen, welche die Bewegung des Türflügels dämpft.

Der mit dem Türflügel gekoppelte Generator ermöglicht in vorteilhafter Weise die Erzeugung der elektrischen Energie aus der vorhandenen mechanischen Energie, so dass die Bremsvorrichtung bzw. der Türschließer autark ohne Fremdenergie arbeiten können. Ausführungsformen der erfindungsgemäßen Bremsvorrichtung können als dämpfendes Element in einen Türschließer eingebaut werden, so dass der Türschließer autark, also ohne Fremdenergie (Netzanschluss, Batterie, usw.) betrieben werden kann. Bei einem solchen Türschließer wird ein Teil der zum Schließen des Türflügels in einem mechanischen Energiespeicher gespeicherten potentiellen Energie zur Versorgung der elektronischen Baugruppen verwendet, welche über einen Bremsstromkreis die wirksame Bremskraft zur Dämpfung der Bewegung des Türflügels erzeugt. Beim Öffnen des Türflügels kann ebenfalls ein Teil der "manuell" eingeleiteten Energie zur Versorgung dieser elektronischen Baugruppen verwendet werden.

In vorteilhafter Ausgestaltung der erfindungsgemäßen Bremsvorrichtung kann der Generator als Elektromotor mit mindestens zwei Wicklungen ausgeführt werden. Hierbei kann mindestens eine erste Wicklung die erste Ausgangsspannung und mindestens eine zweite Wicklung kann die zweite Ausgangsspannung erzeugen. Das bedeutet, dass die mindestens eine zweite Wicklung als Generator arbeitet und die elektrische Energie für die elektronischen Baugruppen erzeugt, und dass die mindestens eine erste Wicklung zur Erzeugung der wirksamen Bremskraft zur Dämpfung des Türflügels eingesetzt wird. Der Elektromotor kann beispielsweise als Bürstenmotor mit zwei Wicklungen und zwei Kommutatoren oder als bürstenloser Gleichstrommotor mit zwei Wicklungen ausgeführt werden. Zudem können die mindestens zwei Wicklungen des Elektromotors auf eine gemeinsame Generatorwelle wirken, welche über ein Getriebe mit einer Abtriebswelle eines mechanischen Energiespeichers in Wirkverbindung steht.

Alternativ kann der Generator zwei Elektromotoren aufweisen. Hierbei können ein erster Elektromotor die erste Ausgangsspannung und ein zweiter Elektromotor die zweite Ausgangsspannung erzeugen. Das bedeutet, dass der erste Elektromotor zur Erzeugung der wirksamen Bremskraft zur Dämpfung des Türflügels eingesetzt wird und der zweite Elektromotor als Generator arbeitet und die elektrische Energie für die elektronischen Baugruppen erzeugt. Der erste Elektromotor kann beispielsweise als Bürstenmotor, und der zweite Elektromotor kann beispielsweise als bürstenloser Gleichstrommotor ausgeführt werden. Zudem können die beiden Elektromotoren jeweils über eine Generatorwelle und ein zugehöriges Getriebe mit einer Abtriebswelle eines mechanischen Energiespeichers in Wirkverbindung stehen. Diese Variante bietet die Vorteile, dass eine optimierte Getriebeauslegung für den Generatorbetrieb möglich ist und die Auswerte- und Steuerelektronik aus der Generatorspannung direkt die Achsgeschwindigkeit berechnen kann. Dadurch ist die Regelung der Dämpfung der Bewegung des Türflügels zumindest für einfache Türschließer ohne zusätzlichen Geschwindigkeitssensor möglich.

In weiterer vorteilhafter Ausgestaltung der erfindungsgemäßen Bremsvorrichtung kann die Auswerte- und Steuereinheit über das Schaltelement eine Pulsweitenmodulation des mit der ersten Ausgangsspannung zusammenwirkenden Motorstroms durchführen und eine wirksame Bremskraft zur Dämpfung der Bewegung des Türflügels einstellen.

Die Pulsweitenmodulation des Motorstroms ermöglicht in vorteilhafter Weise die Vorgabe einer Schließzeit, welche beispielsweise durch Regelung der Schließgeschwindigkeit als Funktion des Öffnungswinkels des Türflügels konstant gehalten werden kann. Die gewünschte Schließzeit kann in vorteilhafter Weise unabhängig von Temperatur, Alterung und Reibung vorgegeben und eingestellt werden. Zudem ermöglichen Ausführungsformen der erfindungsgemäßen Bremsvorrichtung die Implementierung von weiteren parametrierbaren und elektronisch einstellbaren Funktionen, wie beispielsweise einer Endschlagfunktion, welche variierende Einsatzpunkte für den Endschlag und die Endgeschwindigkeit des Fahrzeugflügels in Abhängigkeit von bestimmten Parametern vorgeben kann. Des Weiteren kann eine Öffnungsdämpfungsfunktion implementiert werden, welche die Öffnungsgeschwindigkeit des Türflügels ab einem bestimmten Öffnungswinkel dämpft. Des Weiteren können Zusatzfunktionen wie Zyklenzähler und Speicherung von Wartungsdaten einfach implementiert werden. Zudem weist die erfindungsgemäße Bremsvorrichtung keine leicht brennbaren Stoffe, wie beispielsweise Dämpferöl, auf.

Bei einer bevorzugten Ausführungsform der erfindungsgemäßen Bremsvorrichtung für einen beweglichen Türflügel kann die Auswerte- und Steuereinheit die Dämpfung der Bewegung des Türflügels in Abhängigkeit von einer aktuellen Bewegungsrichtung und/oder einer aktuellen Geschwindigkeit und/oder eines aktuellen Öffnungswinkels des Türflügels einstellen. Die Auswerte- und Steuereinheit kann beispielsweise über mindestens einen Messkreis aus der Motorspannung eine aktuelle Bewegungsrichtung und Geschwindigkeit des Türflügels bestimmen. Hierbei kann die Polarität der Motorspannung eine Information über die Bewegungsrichtung des Türflügels zur Verfügung stellen und die Höhe der Motorspannung kann eine Information zur Ermittlung der Geschwindigkeit des Türflügels zur Verfügung stellen.

In vorteilhafter Ausgestaltung der erfindungsgemäßen Bremsvorrichtung kann die Auswerte- und Steuereinheit die Öffnungsbewegung des Türflügels über die Pulsweitenmodulation des Motorstroms dämpfen, wenn die aktuelle Geschwindigkeit der Öffnungsbewegung einen vorgegebenen Geschwindigkeitsgrenzwert überschreitet. Zusätzlich oder alternativ kann die Auswerte- und Steuereinheit die Öffnungsbewegung des Türflügels über die Pulsweitenmodulation des Motorstroms dämpfen, wenn der aktuelle Öffnungswinkel des Türflügels einen vorgegebenen Öffnungswinkelgrenzwert überschreitet. Des Weiteren kann die Auswerte- und Steuereinheit die Dämpfung der Schließbewegung des Türflügels über die Pulsweitenmodulation des Motorstroms in Abhängigkeit von der aktuellen Geschwindigkeit und/oder des aktuellen Öffnungswinkels des Türflügels so regeln, dass eine vorgegebene Schließzeit erreicht werden kann. Zudem kann die Auswerte- und Steuereinheit die Dämpfung der Schließbewegung des Türflügels beenden, wenn der Türflügel mindestens eine vorgegebene Endschlagbedingung erreicht hat. Als Endschlagbedingung kann beispielsweise eine Endschlaggeschwindigkeit und/oder eine Endschlagposition vorgegeben werden.

In weiterer vorteilhafter Ausgestaltung der erfindungsgemäßen Bremsvorrichtung kann der Ladestromkreis einen Kondensator aufweisen, welcher die erzeugte elektrische Energie zur Energieversorgung der Bremsvorrichtung speichert.

In vorteilhafter Ausgestaltung des erfindungsgemäßen Türschließers kann der mechanische Energiespeicher auf eine Abtriebswelle wirken, welche über einen Gleitarm mit dem Türflügel gekoppelt werden kann. Die Abtriebswelle des mechanischen Energiespeichers kann über mindestens ein Getriebe mit mindestens einer Generatorwelle des Generators der Bremsvorrichtung gekoppelt werden.

Nachfolgend werden Ausführungsbeispiele der Erfindung anhand von zeichnerischen Darstellungen näher erläutert.

Dabei zeigen:
- Fig. 1: eine schematische Darstellung eines Abschnitts eines Türflügels mit einem ersten Ausführungsbeispiel eines erfindungsgemäßen Türschließers mit einer erfindungsgemäßen Bremsvorrichtung,
- Fig. 2: eine schematische Darstellung eines Abschnitts eines Türflügels mit einem zweiten Ausführungsbeispiel eines erfindungsgemäßen Türschließers mit einer erfindungsgemäßen Bremsvorrichtung,
- Fig. 3: ein schematisches Blockdiagramm einer Auswerte- und Steuerelektronik der erfindungsgemäßen Bremsvorrichtung aus Fig. 1 oder 2, .
- Fig. 4: ein schematisches Schaltbild eines Ausführungsbeispiels eines Ladestromkreises der Auswerte- und Steuerelektronik aus Fig. 3, und
- Fig. 5: ein schematisches Schaltbild eines Ausführungsbeispiels eines Bremsstromkreises der Auswerte- und Steuerelektronik aus Fig. 3.

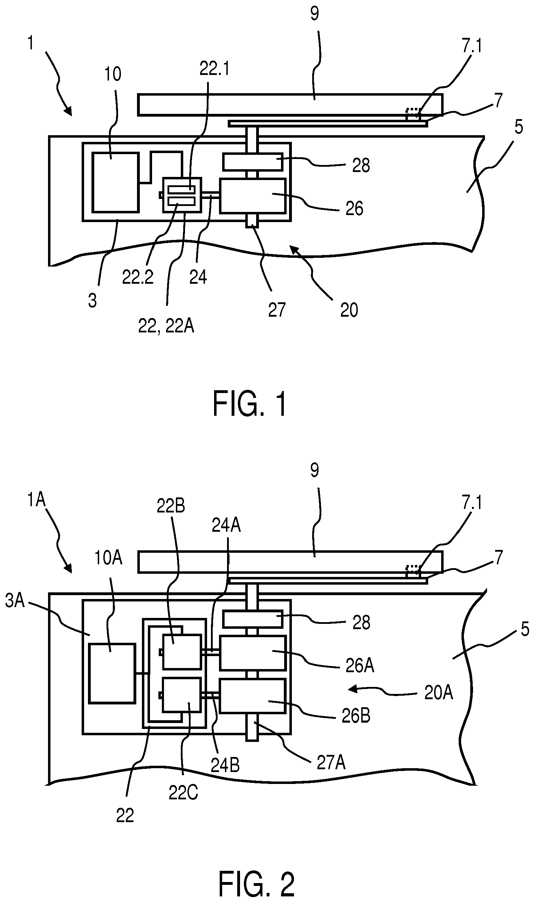

Wie aus Fig. 1 und 2 ersichtlich ist, weist ein Türschließer 1, 1A in den dargestellten Ausführungsbeispielen jeweils ein Gehäuse 3, 3A auf, in welchem ein mechanischer Energiespeicher 28 und eine Bremsvorrichtung 20, 20A angeordnet sind. Der mechanische Energiespeicher 28 ist vorzugsweise als Feder ausgeführt und steht über eine Kraftübertragungseinrichtung mit einem Türflügel 5 in Wirkverbindung. Der mechanische Energiespeicher 28 wird durch manuelles Öffnen des Türflügels 5 mit potentieller Energie aufgeladen und schließt den losgelassenen Türflügel 5 wieder. Die Bremsvorrichtung 20, 20A dämpft die Bewegung des Türflügels 5 und umfasst einen Generator 22, dessen mindestens eine Generatorwelle 24, 24A, 24B durch eine Bewegung des Türflügels 5 drehbar ist und an dessen Anschlussklemmen K1, K2 eine bewegungsabhängige erste Ausgangsspannung U_{A1} entsteht, welche an eine Auswerte- und Steuerelektronik 10 mit einer Auswerte- und Steuereinheit 16 und einem Bremsstromkreis 14 angelegt ist, welcher eine wirksame Bremskraft zur Dämpfung der Bewegung des Türflügels 5 erzeugt. Der Bremsstromkreis 14 weist zumindest ein Schaltelement FET auf, über welches die Anschlussklemmen K1, K2 kurzgeschlossen werden können. Erfindungsgemäß ist eine zweite Ausgangsspannung U_{A2} des Generators 22 an einen Ladestromkreis 12 angelegt, welcher elektrische Energie zur Energieversorgung der Auswerte- und Steuerelektronik 10 speichert.

Wie aus Fig. 1 und 2 weiter ersichtlich ist, ist bei den dargestellten Ausführungsbeispielen das Gehäuse 3, 3A flügelfest am oberen linken Randbereich des beweglichen Türflügels 5 montiert. Der mechanische Energiespeicher 28 wirkt auf eine Abtriebswelle 27, 27A, welche über einen Gleitarm 7 mit dem Türflügel 5 gekoppelt ist. Der Gleitarm 7 weist an seinem freien Ende einen Gleitstein 7.1 auf, welcher in einer blendenfest montierten Gleitschiene 9 geführt ist. Zudem ist die Abtriebswelle 27, 27A des mechanischen Energiespeichers 28 über mindestens ein Getriebe 26, 26A, 26B mit mindestens einer Generatorwelle 24, 24A, 24B des Generators 22 der Bremsvorrichtung 20, 20A gekoppelt.

Beim Öffnen und Schließen des Türflügels 5 wird über das mindestens eine Getriebe 26, 26A, 26B die mindestens eine Generatorwelle 24, 24A, 24B des Generators 22 gedreht. Dabei kann, muss aber nicht, auch der als Feder ausgeführte mechanische Energiespeicher 28 gespannt oder entspannt werden. Bei Freischwing-Systemen kann die Feder 28 beispielsweise in der gespannten Lage (Tür offen) gehalten werden, beim Bewegen des Türflügels 5 wird aber trotzdem die mindestens eine Generatorwelle 24, 24A, 24B gedreht. Dreht sich die mindestens eine Generatorwelle 24, 24A, 24B 24 liegt an den Anschlussklemmen K1, K2 die erste Ausgangsspannung U_{A1} und am Ladestromkreis 12 die zweite Ausgangsspannung U_{A2} an, welche jeweils von der Winkelgeschwindigkeit der korrespondierenden Generatorwelle 24, 24A, 24B abhängig ist.

Wie aus Fig. 1 weiter ersichtlich ist, ist der Generator 22 im dargestellten ersten Ausführungsbeispiel als Elektromotor 22A mit mindestens zwei Wicklungen 22.1, 22.2 ausgeführt. Hierbei erzeugt im dargestellten Ausführungsbeispiel eine erste Wicklung 22.1 die erste Ausgangsspannung U_{A1}, und eine zweite Wicklung 22.2 erzeugt die zweite Ausgangsspannung U_{A2}. Im dargestellten Ausführungsbeispiel ist der als Generator 22 betriebene Elektromotor 22A als bürstenloser Gleichstrommotor mit zwei Wicklungen 22.1, 22.2 ausgeführt, welche auf eine gemeinsame Generatorwelle 24 wirken. Die gemeinsame Generatorwelle 24 steht über ein Getriebe 26 mit der Abtriebswelle 27 des mechanischen Energiespeichers 28 in Wirkverbindung. Bei einem alternativen nicht dargestellten Ausführungsbeispiel ist der Elektromotor 22A als Bürstenmotor mit zwei Wicklungen 22.1, 22.2 und zwei Kommutatoren ausgeführt.

Wie aus Fig. 2 weiter ersichtlich ist, weist der Generator 22 im dargestellten zweiten Ausführungsbeispiel zwei Elektromotoren 22B, 22C auf. Hierbei erzeugt ein erster Elektromotor 22B die erste Ausgangsspannung U_{A1}, und ein zweiter Elektromotor 22C erzeugt die zweite Ausgangsspannung U_{A2}. Hierbei ist der erste Elektromotor 22B als Bürstenmotor und der zweite Elektromotor 22C als bürstenloser Gleichstrommotor ausgeführt. Im dargestellten zweiten Ausführungsbeispiel stehen die beiden Elektromotoren 22B, 22C jeweils über eine Generatorwelle 24A, 24B und ein zugehöriges Getriebe 26A, 26B mit der Abtriebswelle 27A des mechanischen Energiespeichers 28 in Wirkverbindung. Dies ermöglicht in vorteilhafter Weise eine für den Generatorbetrieb optimierte Auslegung des mit der Generatorwelle 24B des zweiten Elektromotors 22C gekoppelten Getriebes 26B.

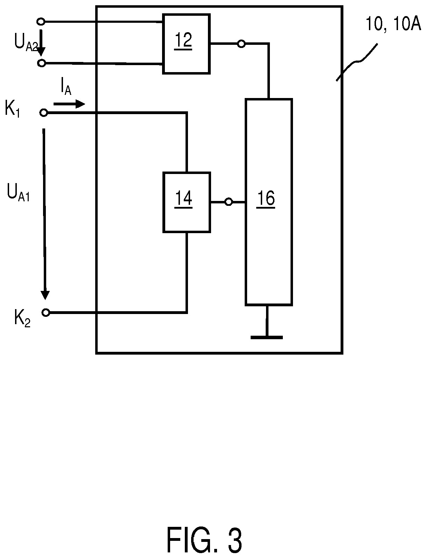

Wie aus Fig. 3 weiter ersichtlich ist, ist umfasst die Auswerte- und Steuerelektronik 10, 10A eine Auswerte- und Steuereinheit 16, welche vorzugsweise als Mikrocontroller ausgeführt ist, einen Ladestromkreis 12, an welchen die zweite Ausgangsspannung U_{A2} angelegt ist, und einen Bremsstromkreis 14, an welchem die erste Ausgangsspannung U_{A1} anliegt.

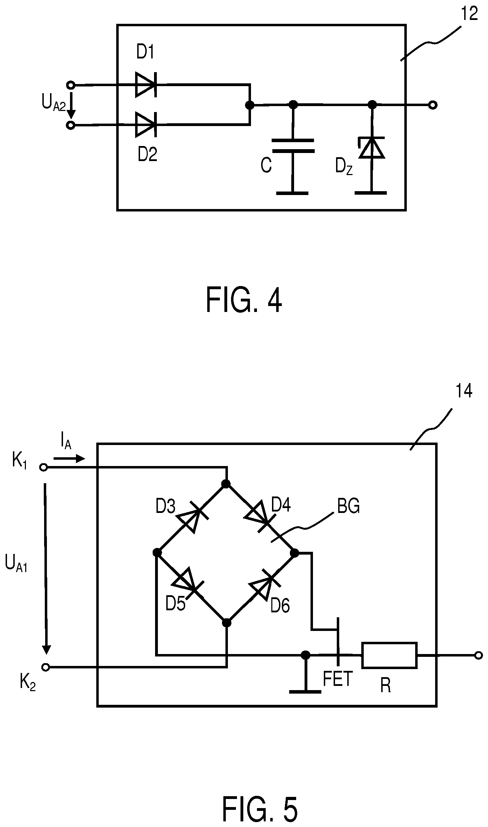

Wie aus Fig. 4 weiter ersichtlich ist, weist Ladestromkreis 12 einen Kondensator C auf, welcher die erzeugte elektrische Energie zur Energieversorgung der Bremsvorrichtung 20, 20A speichert. In Abhängigkeit von der Polarität der zweiten Ausgangsspannung U_{A2} wird diese über eine erste Diode D1 oder über eine zweite Diode D1 an den Speicherkondensator C angelegt. Eine Zenerdiode D_{Z} begrenzt die maximale Spannung.

Wie aus Fig. 5 weiter ersichtlich ist, umfasst der Bremsstromkreis 14 einen Feldeffekttransistor als Schaltelement FET, einen Gatewiderstand R, über welchen das Gate des Feldeffekttransistors FET mit der Auswerte- und Steuereinheit 16 elektrisch verbunden ist, und eine Brückengleichrichterschaltung BG mit vier Dioden D3, D4, D5, D6, welche bewirkt, dass die Polarität der an der Drain-Source-Strecke des Feldeffekttransistors FET anliegenden Spannung unabhängig von der Polarität der ersten Ausgangsspannung U_{A1} des Generators 22 gleich bleibt.

Über den Feldeffekttransistor FET führt die Auswerte- und Steuereinheit 16 nun eine Pulsweitenmodulation des mit der ersten Ausgangsspannung U_{A1} zusammenwirkenden Motorstroms I_{A} durch und stellt eine wirksame Bremskraft zur Dämpfung der Bewegung des Türflügels 5 ein. Das bedeutet, dass die Auswerte- und Steuereinheit 16 zur Dämpfung der Bewegung des Türflügels 5 die Anschlussklemmen K1, K2 über den Feldeffekttransistor FET kurzschließt. Während des Kurzschlusses wird die Winkelgeschwindigkeit der mindestens einen Generatorwelle 24, 24A, 24B gedämpft. Durch die Pulsweitenmodulation des Kurzschlussstromes bzw. Motorstroms I_{A} stellt die Auswerte- und Steuereinheit 16 die Dämpfung der Geschwindigkeit und somit die Bremskraft ein.

Vorzugsweise stellt die Auswerte- und Steuereinheit 16 die Dämpfung der Bewegung des Türflügels 5 in Abhängigkeit von einer aktuellen Bewegungsrichtung und/oder einer aktuellen Geschwindigkeit und/oder eines aktuellen Öffnungswinkels des Türflügels 5 ein. Die Auswerte- und Steuereinheit 16 bestimmt über mindestens einen nicht näher dargestellten Messkreis aus der zweiten Ausgangsspannung U_{A2} eine aktuelle Bewegungsrichtung und Geschwindigkeit des Türflügels 5.

Das bedeutet, dass die Auswerte- und Steuereinheit 16 die Dämpfung der Bewegung des Türflügels 5 in Abhängigkeit von einer aktuellen Bewegungsrichtung und/oder einer aktuellen Geschwindigkeit und/oder eines aktuellen Öffnungswinkels des Türflügels 5 einstellt. So kann die Auswerte- und Steuereinheit 16 die Öffnungsbewegung des Türflügels 5 über die Pulsweitenmodulation des Motorstroms I_{A} dämpfen, wenn die aktuelle Geschwindigkeit der Öffnungsbewegung einen vorgegebenen Geschwindigkeitsgrenzwert überschreitet.

Zudem kann die Auswerte- und Steuereinheit 16 den Einsatzpunkt des Endschlags und die Endgeschwindigkeit auf die gewünschten Werte regeln. Das bedeutet, dass die Auswerte- und Steuereinheit 16 die Dämpfung der Schließbewegung des Türflügels 5 beendet, wenn der Türflügel 5 mindestens eine vorgegebene Endschlagbedingung erreicht hat. Als Endschlagbedingung kann beispielsweise eine Endschlaggeschwindigkeit und/oder eine Endschlagposition vorgegeben werden.

Die Auswerte- und Steuereinheit 16 dämpft die Öffnungsgeschwindigkeit des Türflügels 5 ab einem bestimmten Öffnungswinkel. Das bedeutet, dass die Auswerte- und Steuereinheit 16 die Öffnungsbewegung des Türflügels 5 über die Pulsweitenmodulation des Motorstroms I_{A} dämpft, wenn der aktuelle Öffnungswinkel des Türflügels 5 einen vorgegebenen Öffnungswinkelgrenzwert überschreitet.

### Bezugszeichenliste

- 1, 1A: Türschließer
- 3, 3A: Gehäuse
- 5: Türflügel
- 7: Gleitarm
- 7.1: Gleitstein
- 9: Gleitschiene
- 10, 10A: Auswerte- und Steuerelektronik
- 12: Ladestromkreis (Energieversorgung)
- 14: Bremsstromkreis (Pulsweitenmodulation)
- 16: Auswerte- und Steuereinheit (Mikrocontroller)
- 20: Bremsvorrichtung
- 22: Generator
- 22A: Elektromotor
- 22.1, 22.2: Wicklung
- 22B, 22C: Elektromotor
- 24, 24A, 24B: Generatorwelle
- 26, 26A, 26B: Getriebe
- 27, 27A: Abtriebswelle
- 28: mechanischer Energiespeicher
- D1 bis D6: Diode
- R: ohmscher Widerstand
- C: elektrischer Energiespeicher
- D_{Z}: Zenerdiode
- FET: Feldeffekttransistor
- BG: Brückengleichrichter
- K1, K2: Motorklemme
- U_{A1}: erste Ausgangsspannung
- U_{A2}: zweite Ausgangsspannung
- I_{A}: Motorstrom

## Patentansprüche

1. Bremsvorrichtung (20, 20A) für einen beweglichen Türflügel (5) mit einem Generator (22) dessen mindestens eine Generatorwelle (24, 24A, 24B) durch eine Bewegung des Türflügels (5) drehbar ist und an dessen Anschlussklemmen (K1, K2) eine bewegungsabhängige erste Ausgangsspannung (U_{A1}) entsteht, welche an eine Auswerte- und Steuerelektronik (10) mit einer Auswerte- und Steuereinheit (16) und einem Bremsstromkreis (14) angelegt ist, welcher eine wirksame Bremskraft zur Dämpfung der Bewegung des Türflügels (5) erzeugt, wobei der Bremsstromkreis (14) zumindest ein Schaltelement (FET) aufweist, über welches die Anschlussklemmen (K1, K2) kurzschließbar sind,
**dadurch gekennzeichnet,**
**dass** eine zweite Ausgangsspannung (U_{A2}) des Generators (22) an einen Ladestromkreis (12) angelegt ist, welcher elektrische Energie zur Energieversorgung der Auswerte- und Steuerelektronik (10) speichert.

2. Bremsvorrichtung nach Anspruch 1,
**dadurch gekennzeichnet,**
**dass** der Generator (22) als Elektromotor (22A) mit mindestens zwei Wicklungen (22.1, 22.2) ausgeführt ist, wobei mindestens eine erste Wicklung (22.1) die erste Ausgangsspannung (U_{A1}) und mindestens eine zweite Wicklung (22.2) die zweite Ausgangsspannung (U_{A2}) erzeugt.

3. Bremsvorrichtung nach Anspruch 2,
**dadurch gekennzeichnet,**
**dass** der Elektromotor (22A) als Bürstenmotor mit zwei Wicklungen (22.1, 22.2) und zwei Kommutatoren oder als bürstenloser Gleichstrommotor mit zwei Wicklungen (22.1, 22.2) ausgeführt ist.

4. Bremsvorrichtung nach Anspruch 2 oder 3,
**dadurch gekennzeichnet,**
**dass** die mindestens zwei Wicklungen (22.1, 22.2) des Elektromotors (22A) auf eine gemeinsame Generatorwelle (24) wirken, welche über ein Getriebe (26) mit einer Abtriebswelle (27) eines mechanischen Energiespeichers (28) in Wirkverbindung steht.

5. Bremsvorrichtung nach Anspruch 1,
**dadurch gekennzeichnet,**
**dass** der Generator (22) zwei Elektromotoren (22B, 22C) aufweist, wobei ein erster Elektromotor (22B) die erste Ausgangsspannung (U_{A1}) und ein zweiter Elektromotor (22C) die zweite Ausgangsspannung (U_{A2}) erzeugt.

6. Bremsvorrichtung nach Anspruch 4,
**dadurch gekennzeichnet,**
**dass** der erste Elektromotor (22B) als Bürstenmotor und der zweite Elektromotor (22C) als bürstenloser Gleichstrommotor ausgeführt ist.

7. Bremsvorrichtung nach Anspruch 5 oder 6,
**dadurch gekennzeichnet,**
**dass** die beiden Elektromotoren (22B, 22C) jeweils über eine Generatorwelle (24A, 24B) und ein zugehöriges Getriebe (26A, 26B) mit einer Abtriebswelle (27A) eines mechanischen Energiespeichers (28) in Wirkverbindung stehen.

8. Bremsvorrichtung nach einem der Ansprüche 1 bis 7,
**dadurch gekennzeichnet,**
**dass** die Auswerte- und Steuereinheit (16) über das Schaltelement (FET) eine Pulsweitenmodulation des mit der ersten Ausgangsspannung (U_{A1}) zusammenwirkenden Motorstroms (I_{A}) durchführt und eine wirksame Bremskraft zur Dämpfung der Bewegung des Türflügels (5) einstellt.

9. Bremsvorrichtung nach Anspruch 8,
**dadurch gekennzeichnet,**
**dass** die Auswerte- und Steuereinheit (16) die Dämpfung der Bewegung des Türflügels (5) in Abhängigkeit von einer aktuellen Bewegungsrichtung und/oder einer aktuellen Geschwindigkeit und/oder eines aktuellen Öffnungswinkels des Türflügels (5) einstellt.

10. Bremsvorrichtung nach Anspruch 9,
**dadurch gekennzeichnet,**
**dass** die Auswerte- und Steuereinheit (16) über mindestens einen Messkreis aus der zweiten Ausgangsspannung (U_{A2}) eine aktuelle Bewegungsrichtung und Geschwindigkeit des Türflügels (5) bestimmt.

11. Bremsvorrichtung nach einem der Ansprüche 1 bis 10,
**dadurch gekennzeichnet,**
**dass** der Ladestromkreis (12) einen Kondensator (C) aufweist, welcher die erzeugte elektrische Energie zur Energieversorgung der Bremsvorrichtung (20) speichert.

12. Türschließer (1, 1A) mit einem mechanischen Energiespeicher (28), welcher über eine Kraftübertragungseinrichtung mit einem Türflügel (5) in Wirkverbindung steht und durch manuelles Öffnen des Türflügels (5) mit potentieller Energie aufladbar ist und den losgelassenen Türflügel (5) schließt, und einer Bremsvorrichtung (20, 20A), welche die Bewegung des Türflügels (5) dämpft,
**dadurch gekennzeichnet,**
**dass** die Bremsvorrichtung (20, 20A) nach mindestens einem der Ansprüche 1 bis 11 ausgeführt ist.

13. Türschließer nach Anspruch 12,
**dadurch gekennzeichnet,**
**dass** der mechanische Energiespeicher (28) auf eine Abtriebswelle (27, 27A) wirkt, welche über einen Gleitarm (7) mit dem Türflügel (5) gekoppelt ist.

14. Türschließer nach Anspruch 13,
**dadurch gekennzeichnet,**
**dass** die Abtriebswelle (27, 27A) des mechanischen Energiespeichers (28) über mindestens ein Getriebe (26, 26A, 26B) mit mindestens einer Generatorwelle (24, 24A, 24B) des Generators (22) der Bremsvorrichtung (20, 20A) gekoppelt ist.

## Claims

1. Braking device (20, 20A) for a movable door leaf (5), with a generator (22), the at least one generator shaft (24, 24A, 24B) of which is rotatable by movement of the door leaf (5) and at the connection terminals (K1, K2) of which a movement-dependent first output voltage (U_{A1}) is produced which is applied to an evaluation and control electronics system (10) having an evaluation and control unit (16) and a braking circuit (14) which generates an effective braking force for damping the movement of the door leaf (5), wherein the braking circuit (14) has at least one switching element (FET) via which the connection terminals (K1, K2) can be short-circuited,
**characterized**
**in that** a second output voltage (U_{A2}) of the generator (22) is applied to a charging circuit (12) which stores electrical energy for supplying the evaluation and control electronics system (10) with power.

2. Braking device according to Claim 1,
**characterized**
**in that** the generator (22) is designed as an electric motor (22A) with at least two windings (22.1, 22.2), at least one first winding (22.1) generating the first output voltage (U_{A1}) and at least one second winding (22.2) generating the second output voltage (U_{A2}) .

3. Braking device according to Claim 2,
**characterized**
**in that** the electric motor (22A) is designed as a brush motor with two windings (22.1, 22.2) and two commutators or as a brushless direct current motor with two windings (22.1, 22.2).

4. Braking device according to Claim 2 or 3,
**characterized**
**in that** the at least two windings (22.1, 22.2) of the electric motor (22A) act on a common generator shaft (24) which is operatively connected via a gearing (26) to an output shaft (27) of a mechanical energy store (28).

5. Braking device according to Claim 1,
**characterized**
**in that** the generator (22) has two electric motors (22B, 22C), a first electric motor (22B) generating the first output voltage (U_{A1}) and a second electric motor (22C) generating the second output voltage (U_{A2}).

6. Braking device according to Claim 4,
**characterized**
**in that** the first electric motor (22B) is designed as a brush motor and the second electric motor (22C) as a brushless direct current motor.

7. Braking device according to Claim 5 or 6,
**characterized**
**in that** the two electric motors (22B, 22C) are each operatively connected via a generator shaft (24A, 24B) and an associated gearing (26A, 26B) to an output shaft (27A) of a mechanical energy store (28) .

8. Braking device according to one of Claims 1 to 7,
**characterized**
**in that** the evaluation and control unit (16) carries out, via the switching element (FET), a pulse width modulation of the motor current (I_{A}) interacting with the first output voltage (U_{A1}) and sets an effective braking force for damping the movement of the door leaf (5).

9. Braking device according to Claim 8,
**characterized**
**in that** the evaluation and control unit (16) sets the damping of the movement of the door leaf (5) depending on a current direction of movement and/or a current speed and/or a current opening angle of the door leaf (5).

10. Braking device according to Claim 9,
**characterized**
**in that** the evaluation and control unit (16) determines a current direction of movement and speed of the door leaf (5) from the second output voltage (U_{A2}) via at least one measurement circuit.

11. Braking device according to one of Claims 1 to 10,
**characterized**
**in that** the charging circuit (12) has a capacitor (C) which stores the generated electrical energy for supplying the braking device (20) with power.

12. Door closer (1, 1A) with a mechanical energy store (28) which is operatively connected via a force transmission device to a door leaf (5) and is chargeable with potential energy by manual opening of the door leaf (5) and closes the released door leaf (5), and with a braking device (20, 20A) which damps the movement of the door leaf (5),
**characterized**
**in that** the braking device (20, 20A) is designed according to at least one of Claims 1 to 11.

13. Door closer according to Claim 12,
**characterized**
**in that** the mechanical energy store (28) acts on an output shaft (27, 27A) which is coupled to the door leaf (5) via a sliding arm (7).

14. Door closer according to Claim 13,
**characterized**
**in that** the output shaft (27, 27A) of the mechanical energy store (28) is coupled via at least one gearing (26, 26A, 26B) to at least one generator shaft (24, 24A, 24B) of the generator (22) of the braking device (20, 20A).

## Revendications

1. Dispositif de freinage (20, 20A) d'un battant de porte (5) mobile, comprenant un générateur (22) dont l'au moins un arbre de générateur (24, 24A, 24B) peut être entraîné en rotation par un mouvement du battant de porte (5) et aux bornes de connexion (K1, K2) duquel est produite une première tension de sortie (U_{A1}) dépendant du mouvement, qui est appliquée à une électronique d'évaluation et de commande (10) comprenant une unité d'évaluation et de commande (16) et un circuit de courant de freinage (14) qui génère une force de freinage active pour l'amortissement du mouvement du battant de porte (5), le circuit de courant de freinage (14) comportant au moins un élément de commutation (FET) par le biais duquel les bornes de connexion (K1, K2) peuvent être court-circuitées,
**caractérisé en ce qu'**une deuxième tension de sortie (U_{A2}) du générateur (22) est appliquée à un circuit de charge (12) qui accumule de l'énergie électrique pour l'alimentation en énergie de l'électronique d'évaluation et de commande (10).

2. Dispositif de freinage selon la revendication 1, **caractérisé en ce que** le générateur (22) est réalisé sous la forme d'un moteur électrique (22A) comprenant au moins deux enroulements (22.1, 22.2), au moins un premier enroulement (22.1) générant la première tension de sortie (U_{A1}) et au moins un deuxième enroulement (22.2) générant la deuxième tension de sortie (U_{A2}).

3. Dispositif de freinage selon la revendication 2, **caractérisé en ce que** le moteur électrique (22A) est réalisé sous la forme d'un moteur à balais comprenant deux enroulements (22.1, 22.2) et deux commutateurs ou sous la forme d'un moteur à courant continu sans balais comprenant deux enroulements (22.1, 22.2).

4. Dispositif de freinage selon la revendication 2 ou 3,
**caractérisé en ce que** lesdits au moins deux enroulements (22.1, 22.2) du moteur électrique (22A) agissent sur un arbre de générateur commun (24) qui est en liaison active, par le biais d'un engrenage (26), avec un arbre de sortie (27) d'un accumulateur d'énergie mécanique (28) .

5. Dispositif de freinage selon la revendication 1, **caractérisé en ce que** le générateur (22) comporte deux moteurs électriques (22B, 22C), un premier moteur électrique (22B) générant la première tension de sortie (U_{A1}) et un deuxième moteur électrique (22C) générant la deuxième tension de sortie (U_{A2}) .

6. Dispositif de freinage selon la revendication 4, **caractérisé en ce que** le premier moteur électrique (22B) est réalisé sous la forme d'un moteur à balais et le deuxième moteur électrique (22C) est réalisé sous la forme d'un moteur à courant continu sans balais.

7. Dispositif de freinage selon la revendication 5 ou 6,
**caractérisé en ce que** les deux moteurs électriques (22B, 22C) sont respectivement en liaison active, par le biais d'un arbre de générateur (24A, 24B) et d'un engrenage associé (26A, 26B), avec un arbre de sortie (27A) d'un accumulateur d'énergie mécanique (28).

8. Dispositif de freinage selon l'une des revendications 1 à 7,
**caractérisé en ce que** l'unité d'évaluation et de commande (16) effectue, par le biais de l'élément de commutation (FET), une modulation en largeur d'impulsion du courant de moteur (I_{A}) coopérant avec la première tension de sortie (U_{A1}) et règle une force de freinage active pour l'amortissement du mouvement du battant de porte (5).

9. Dispositif de freinage selon la revendication 8, **caractérisé en ce que** l'unité d'évaluation et de commande (16) règle l'amortissement du mouvement du battant de porte (5) en fonction d'une direction de mouvement actuelle et/ou d'une vitesse actuelle et/ou d'un angle d'ouverture actuel du battant de porte (5).

10. Dispositif de freinage selon la revendication 9, **caractérisé en ce que** l'unité d'évaluation et de commande (16) détermine, par le biais d'au moins un circuit de mesure, une direction de mouvement et une vitesse actuelles du battant de porte (5) à partir de la deuxième tension de sortie (U_{A2}) .

11. Dispositif de freinage selon l'une des revendications 1 à 10,
**caractérisé en ce que** le circuit de charge (12) comporte un condensateur (C) qui accumule l'énergie électrique générée pour alimenter en énergie le dispositif de freinage (20).

12. Dispositif de fermeture de porte (1, 1A) comprenant un accumulateur d'énergie mécanique (28) qui est en liaison active avec un battant de porte (5) par le biais d'un dispositif de transmission de force et qui peut être chargé d'énergie potentielle par l'ouverture manuelle du battant de porte (5) et qui ferme le battant de porte (5) relâché, et un dispositif de freinage (20, 20A) qui amortit le mouvement du battant de porte (5),
**caractérisé en ce que** le dispositif de freinage (20, 20A) est réalisé selon au moins l'une des revendications 1 à 11.

13. Dispositif de fermeture de porte selon la revendication 12,
**caractérisé en ce que** l'accumulateur d'énergie mécanique (28) agit sur un arbre de sortie (27, 27A) qui est couplé au battant de porte (5) par le biais d'un bras coulissant (7) .

14. Dispositif de fermeture de porte selon la revendication 13,
**caractérisé en ce que** l'arbre de sortie (27, 27A) du dispositif d'accumulation d'énergie mécanique (28) est couplé, par le biais d'au moins un engrenage (26, 26A, 26B), à au moins un arbre de générateur (24, 24A, 24B) du générateur (22) du dispositif de freinage (20, 20A).
